# EUROPEAN PATENT SPECIFICATION

(11) **EP 4 144 793 B1**
(45) Date of publication and mention of the grant of the patent: **30.04.2025**
(21) Application number: 21194921.9
(22) Date of filing: 03.09.2021
(51) Int. Cl.: C08L 7/00, B60C 1/00, C08K 3/011

(54) **COMPOUND FOR A TYRE CARCASS PORTION**
VERBINDUNG FÜR REIFENKARKASSENTEIL
COMPOSÉ POUR UNE PARTIE DE CARCASSE DE PNEU

(43) Date of publication of application: 08.03.2023
(73) Proprietor: Bridgestone Europe NV/SA, 1930 Zaventem (BE)
(72) Inventor: LOMBARDI, Roberto, 00128 Roma (IT)
(74) Representative: Studio Torta S.p.A.

(56) References cited:
- EP-A1- 1 674 292
- EP-A1- 2 730 609
- EP-A1- 2 913 367
- US-A1- 2012 285 599
- US-A1- 2014 235 764

## Description

The invention relates to a rubber compound for a tyre carcass portion, to a tyre carcass portion manufactured with the rubber compound, to a tyre comprising a carcass portion manufactured with the rubber compound and to the use of a vulcanization system in a rubber compound for tire carcass portions.

The compounds used for tyre carcasses mainly have to ensure good properties in terms of handling, rolling resistance and resistance to the propagation of cracks. Furthermore, as a person skilled in the art can easily understand, processing-related properties, such as for example viscosity and reversion, have to be ensured.

As a person skilled in the art knows, those solutions that lead to an improvement of one of the properties mentioned above generally involve, at the same time, a worsening of other properties.

For example, in order to improve performances in terms of handling, the stiffness of the carcass portions of a tyre needs to be increased and this is generally obtained by increasing the content of carbon black in the compound.

This solution, however, despite producing a stiffness increase, hence ensuring better performances in terms of handling, causes drawbacks in terms of rolling resistance. Since the rolling resistance feature is extremely relevant for a positive evaluation of the tyre as a whole, it is inconvenient to improve said stiffness by only acting upon the quantity of carbon black.

Furthermore, an increase in the content of carbon black in the compound also translates into an increase in viscosity and, hence, into a worsening of the processing conditions of the compound.

Another problem arising from the increase in the content of carbon black in the compound relates to the reversion phenomenon during the vulcanization step. This phenomenon occurs, in particular, in natural rubber-based compounds and leads to a degradation of the compound during the vulcanization step. The reversion phenomenon, besides implying a given degree of rubber degradation, necessarily requires an accurate control of the vulcanization process, with obvious drawbacks in terms of productivity deriving therefrom.

Therefore, a solution is needed, which ensures a correct balance of handling, rolling resistance, viscosity and reversion properties.

The inventor of this invention found out that, by using a particular composition of a vulcanization system, in terms of type and quantity of ingredients, the aforesaid need can be fulfilled.

According to one aspect, the present invention relates to a rubber compound for tyre carcass portions comprising at least a polymer base with a cross-linkable unsaturated chain comprising at least 50% by weight of the polymer base of natural rubber, a filler comprising carbon black and a vulcanization system comprising sulphur; said compound being characterized in that said vulcanization system comprises a mixture of 45 to 55% by weight of N-t-butylbenzothiazole-2-sulfenamide (TBBS) as accelerator and 45 to 55% by weight of hexamethylene bis(thiosulfate) (HTS) as anti-reversion agent.

Experiments have shown that the presence of a polymer base consisting of at least 50% by weight of the polymer base of natural rubber is an essential feature for the effectiveness of the invention. It is shown that at a lower quantity of natural rubber the advantages are not achieved, especially the balance between handling and rolling resistance.

Hereinafter, the term "polymer cross-linkable unsaturated chain" identifies any natural or synthetic non-cross-linked polymer capable of taking on all the chemical-physical and mechanical features, which are typically assumed by elastomers following a cross-linking (vulcanization).

Hereinafter the term "vulcanization system" indicates an assembly of ingredients comprising at least sulphur and one or more accelerator agents, which, in the preparation of the compound, are added in a final mixing step and fulfil the aim of supporting the vulcanization of the polymer base once the compound is subjected to a vulcanization temperature.

Said mixture of at least one accelerator and at least one anti-reversion agent preferably consists of about 50% by weight of the mixture of TBBS and about 50% by weight of the mixture of HTS.

Said vulcanization system preferably comprises 1.5 to 3.5 phr of free sulphur and 1 to 3 phr of the mixture of accelerators and anti-reversion agents.

The polymer base with a cross-linkable unsaturated chain preferably comprises at least 65% by weight of the polymer base of natural rubber.

The polymer base preferably consists of a mixture of natural rubber and a copolymer of butadiene.

The compound according to the invention preferably comprises carbon black as sole filler.

According to a second aspect, the present invention relates to a tyre carcass portion manufactured with the compound according to the invention.

The carcass portion preferably is UNDERTREAD or TREAD PLY INSERT or BASE COMPOUND.

According to a third aspect, the present invention relates to a tyre comprising a carcass portion manufactured with the compound according to the invention.

Below are some explanatory and non-limiting examples.

Two set of experiments (Experiment 1 and Experiment 2) have been prepared. The two set of experiments differ from each other in the amount of carbon black used. Each set of experiments comprises a reference compound (Ref.1 and Ref.2) relating to a prior art rubber compound of a carcass portion, a comparison compound (Comp.1 and Comp.2) obtained by adding additional carbon black to the reference compound and three compounds according to the invention (A - C and D - F).

A further experiment (Experiment 3) has been prepared to show that the presence of a polymer base consisting of more than 50% by weight of the polymer base of natural rubber is an essential feature for the effectiveness of the invention. The experiment 3 comprises a reference compound (Ref.3) relating to a tyre carcass portion comprising 40% by weight of the polymer base of natural rubber, and 40 phr of CB, a comparison compound (Comp.3) obtained by adding carbon black to the reference compound 3 and three further reference compounds of (4 - 6), containing the vulcanization system of the claimed invention with a lower quantity of natural rubber with respect to the claimed invention, which are directly comparable with examples A - C with the only difference of the amount of natural rubber.

The compounds of the examples were prepared according to a standard procedure, which is not relevant for the purposes of the invention.

### - preparation of the compounds -

### (first mixing step)

The cross-linkable polymer base and the carbon black were loaded into a mixer with tangential rotors and with an inner volume ranging from 230 to 270 liters before the beginning of the mixing, thus reaching a filling factor ranging from 66 to 72%.

The mixer was operated at a speed ranging from 40 to 60 revolutions/minute and the mixture resulting therefrom was removed after having reached a temperature ranging from 140 to 160°C.

### (second mixing step)

The mixture obtained from the preceding step was newly processed in a mixer operated at a speed ranging from 40 to 60 revolutions/minute and, subsequently, was removed after having reached a temperature ranging from 130 to 15°C.

### (final mixing step)

The vulcanization system (sulphur, accelerators, anti-reversion agents, antioxidants/antiozonants, zinc oxide) was added to the mixture obtained from the preceding step, thus reaching a filling factor ranging from 63 to 67%.

The mixing was operated at a speed ranging from 20 to 40 revolutions/minute and the mixture resulting therefrom was removed after having reached a temperature ranging from 100 to 110°C.

Tables I, II and III show the phr compositions of fifteen compounds described above.

### Experiment 1

**Table I**

| | Ref.1 | Comp.1 | A | B | C |
|---|---|---|---|---|---|
| NR | 80 | | | | |
| BR | 20 | | | | |
| CB | 40 | 45 | 40 | 40 | 40 |
| Antioxidant | 0.5 | | | | |
| Antiozonant | 1 | | | | |
| ZnO2 | 3 | | | | |
| Stearic acid | 1 | | | | |
| Sulphur | 2.8 | | | | |
| CBS | -- | -- | 0.50 | -- | 0.35 |
| TBBS | 1.50 | 1.50 | 0.50 | 0.75 | 0.35 |
| HTS | -- | -- | 0.50 | 0.75 | 0.70 |

### Experiment 2

**Table II**

| | Ref.2 | Comp. 2 | D | E | F |
|---|---|---|---|---|---|
| NR | 80 | | | | |
| BR | 20 | | | | |
| CB | 25 | 30 | 25 | 25 | 25 |
| Antioxidant | 0.5 | | | | |
| Antiozonant | 1 | | | | |
| ZnO2 | 3 | | | | |
| Stearic acid | 1 | | | | |
| Sulphur | 2.8 | | | | |
| CBS | -- | -- | 0.50 | -- | 0.35 |
| TBBS | 1.50 | 1.50 | 0.50 | 0.75 | 0.35 |
| HTS | -- | -- | 0.50 | 0.75 | 0.70 |

### Experiment 3

**Table III**

| | Ref.3 | Comp. 3 | Comp. 4 | Comp. 5 | Comp. 6 |
|---|---|---|---|---|---|
| NR | 40 | | | | |
| BR | 60 | | | | |
| CB | 40 | 45 | 40 | 40 | 40 |
| Antioxidant | 0.5 | | | | |
| Antiozonant | 1 | | | | |
| ZnO2 | 3 | | | | |
| Stearic acid | 1 | | | | |
| Sulphur | 2.8 | | | | |
| CBS | -- | -- | 0.50 | -- | 0.35 |
| TBBS | 1.50 | 1.50 | 0.50 | 0.75 | 0.35 |
| HTS | -- | -- | 0.50 | 0.75 | 0.70 |

NR is a 1,4-cis polyisoprene rubber of natural origin.

BR is a polymer base consisting of polybutadiene.

The carbon black (CB) used is classified as N330.

TBBS stands for N-t-butylbenzothiazole-2-sulfenamide used as vulcanization accelerator.

CBS stands for n-cyclohexyl -2- benzothiazole sulfonamide used as vulcanization accelerator.

HTS stands for hexamethylene bis(thiosulfate) used as anti-reversion agent.

Each one of the aforesaid compounds was subjected to tests for the assessment of its viscosity properties and, after having undergone vulcanization, to tests for the assessment of its dynamic-mechanical and mechanical properties.

Viscosity was measured according to standard ASTM 1646; mechanical properties were measured according to standard ASTM D412C; dynamic-mechanical properties were measured according to standard ISO 4664; resistance to the propagation of cracks was measured according to standard ISO 27727.

In particular, reversion values were also calculated. The reversion index is given by (MH - S' 24 min / (MH - ML). Wherein MH is the torque value at the peak of the rheological curve and S' is the torque value measured in a generic instant of the test. S'24 min is the torque value measured at 24 minutes. The smaller the reversion index, the better the result obtained.

Tables IV, V and VI show the results obtained from the tests mentioned above. The reference compounds 1, 2 and 3 were normalized to 100 in order to show the behavior of the comparative and invention examples. In order to more clearly display the advantages of the compounds according to the invention, the values of the different properties were indexed to the ones of the reference compound. The arrows ↓ and ↑ next to each single property indicate that the lower the value, the better the property and the higher the value, the better the property, respectively.

**Table IV Experiment 1**

| | Ref.1 | Comp. 1 | A | B | C |
|---|---|---|---|---|---|
| Reversion ↓ | 100 | 112.3 | 80.9 | 50.6 | 55.1 |
| Viscosity ↓ | 100 | 105.2 | 95.8 | 99 | 95.8 |
| Tan D ↓ | 100 | 107.5 | 100 | 88.2 | 100 |
| E' ↑ | 100 | 137.0 | 105 | 105 | 104 |
| Crack propagation ↓ | 100 | 112.6 | 90.7 | 34.73 | 65.9 |

**Table V Experiment 2**

| | Ref.2 | Comp. 2 | D | E | F |
|---|---|---|---|---|---|
| Reversion ↓ | 100 | 115.4 | 77.7 | 52.8 | 57.7 |
| Viscosity ↓ | 100 | 110.8 | 98.1 | 99.6 | 91.0 |
| Tan D ↓ | 100 | 113.0 | 100.0 | 93.2 | 100 |
| E' ↑ | 100 | 135.3 | 105.6 | 104.7 | 106.6 |
| Crack propagation ↓ | 100 | 116.0 | 89.6 | 34.2 | 63.8 |

**Table VI Experiment 3**

| | Ref.3 | Comp. 3 | G | H | I |
|---|---|---|---|---|---|
| Reversion ↓ | 100 | 109.5 | 93.2 | 88.8 | 80.1 |
| Viscosity ↓ | 100 | 104.5 | 104.0 | 105.2 | 104.1 |
| Tan D ↓ | 100 | 108.5 | 100.3 | 102.4 | 102.5 |
| E' ↑ | 100 | 124.5 | 97.5 | 98.0 | 94.6 |
| Crack propagation ↓ | 100 | 122.0 | 35.0 | 56.3 | 20.6 |

As a person skilled in the art knows, Tan D is directly correlated with rolling resistance, whereas E' is directly correlated with stiffness.

According to the results shown in Tables IV and V, the solution of the invention manages to ensure that all properties taken into consideration remain within allowed limits, even when one of them improves in a significant manner. The results shown in Table VI show that the claimed vulcanization system ensures to obtain the optimal balance of performance only at the presence of the claimed quantity of natural rubber.

Results of reference Comp.1, Comp.2 and Comp.3 show that an increase in the content of carbon black produces an improvement in terms of stiffness but, at the same time, involves a worsening in terms of rolling resistance, viscosity and reversion.

Differently, results of the invention compounds (A - C and D - F) show that the use of the vulcanization system of the invention allows to improve stiffness without worsening rolling resistance, viscosity and reversion. Results of reference Compounds (4 - 6), directly comparable to (A - C) show that this is not achieved at a lower quantity of natural rubber in the rubber blend. In this regard, it is important to underline that for some examples the vulcanization system of the invention not only improves the stiffness, but also improves rolling resistance, viscosity and reversion.

Finally, results shown in Tables IV and V demonstrate that the vulcanization system of the invention is effective at different amount of carbon black.

## Claims

1. A rubber compound for tyre carcass portions comprising at least a polymer base with a cross-linkable unsaturated chain comprising at least 50% by weight of the polymer base of natural rubber, a filler comprising carbon black and a vulcanization system comprising sulphur; said compound being **characterized in that** said vulcanization system comprises a mixture of 45 to 55% by weight of N-t-butylbenzothiazole-2-sulfenamide (TBBS) as accelerator and 45 to 55% by weight of hexamethylene bis(thiosulfate) (HTS) as anti-reversion agent.

2. A rubber compound according to claim 1, **characterized in that** said mixture of at least one accelerator and at least one anti-reversion agent consists of about 50% by weight of the mixture of TBBS and about 50% by weight of the mixture of HTS.

3. A rubber compound according to claim 1 or 2, **characterized in that** said vulcanization system comprises 1.5 to 3.5 phr of free sulphur and 1 to 3 phr of the mixture of at least one accelerator and at least one anti-reversion agent.

4. A rubber compound according to one of the previous claims, **characterized in that** the polymer base with a cross-linkable unsaturated chain comprises at least 65% by weight of the polymer base of natural rubber.

5. A rubber compound according to any of the previous claims, **characterized in that** the polymer base with a cross-linkable unsaturated chain consists of a mixture of natural rubber and a copolymer of butadiene.

6. A rubber compound according to any of the previous claims, **characterized by** comprising carbon black as sole filler.

7. Tire carcass portion manufactured with a compound according to any of the previous claims.

8. Tire carcass portion according to claim 7 characterized to be UNDERTREAD or TREAD PLY INSERT or BASE COMPOUND.

9. Tire comprising a portion according to claim 7 or 8.

## Patentansprüche

1. Kautschukmischung für Reifenkarkassenabschnitte, umfassend mindestens eine Polymerbasis mit einer vernetzbaren ungesättigten Kette, die mindestens 50 Gew.- % der Polymerbasis aus Naturkautschuk umfasst, einen Füllstoff, der Ruß umfasst, und ein Vulkanisationssystem, das Schwefel umfasst; wobei die Mischung **dadurch gekennzeichnet ist, dass** das Vulkanisationssystem ein Gemisch aus 45 bis 55 Gew.- % N-t-Butylbenzothiazol-2-sulfenamid (TBBS) als Beschleuniger und 45 bis 55 Gew.-% Hexamethylenbis(thiosulfat) (HTS) als Reversionsschutzmittel umfasst.

2. Kautschukmischung nach Anspruch 1, **dadurch gekennzeichnet, dass** das Gemisch aus mindestens einem Beschleuniger und mindestens einem Reversionsschutzmittel aus etwa 50 Gew.- % des Gemisches aus TBBS und etwa 50 Gew.- % des Gemisches aus HTS besteht.

3. Kautschukmischung nach Anspruch 1 oder 2, **dadurch gekennzeichnet, dass** das Vulkanisationssystem 1,5 bis 3,5 ThK freien Schwefel und 1 bis 3 ThK des Gemisches aus mindestens einem Beschleuniger und mindestens einem Reversionsschutzmittel umfasst.

4. Kautschukmischung nach einem der vorhergehenden Ansprüche, **dadurch gekennzeichnet, dass** die Polymerbasis mit einer vernetzbaren ungesättigten Kette mindestens 65 Gew.-% der Polymerbasis aus Naturkautschuk umfasst.

5. Kautschukmischung nach einem der vorhergehenden Ansprüche, **dadurch gekennzeichnet, dass** die Polymerbasis mit einer vernetzbaren ungesättigten Kette aus einem Gemisch aus Naturkautschuk und einem Butadien-Copolymer besteht.

6. Kautschukmischung nach einem der vorhergehenden Ansprüche, **dadurch gekennzeichnet, dass** sie Ruß als einzigen Füllstoff umfasst.

7. Reifenkarkassenabschnitt, hergestellt mit einer Mischung nach einem der vorhergehenden Ansprüche.

8. Reifenkarkassenabschnitt nach Anspruch 7, **dadurch gekennzeichnet, dass** er UNTERLAUFFLÄCHE oder LAUFFLÄCHENEINLAGE ODER BASISMISCHUNG ist.

9. Reifen, umfassend einen Abschnitt nach Anspruch 7 oder 8.

## Revendications

1. Composé de caoutchouc pour des parties de carcasse de pneu comprenant au moins une base polymère avec une chaîne insaturée réticulable comprenant au moins 50 % en poids de la base polymère de caoutchouc naturel, une charge comprenant du noir de carbone et un système de vulcanisation comprenant du soufre ; ledit composé étant **caractérisé en ce que** ledit système de vulcanisation comprend un mélange de 45 à 55 % en poids de N-t-butylbenzothiazole-2-sulfénamide (TBBS) comme accélérateur et de 45 à 55 % en poids d'hexaméthylène bis(thiosulfate) (HTS) comme agent anti-réversion.

2. Composé de caoutchouc selon la revendication 1, **caractérisé en ce que** ledit mélange d'au moins un accélérateur et d'au moins un agent anti-réversion est constitué d'environ 50 % en poids du mélange de TBBS et d'environ 50 % en poids du mélange de HTS.

3. Composé de caoutchouc selon la revendication 1 ou 2, **caractérisé en ce que** ledit système de vulcanisation comprend de 1,5 à 3,5 pce de soufre libre et de 1 à 3 pce du mélange d'au moins un accélérateur et d'au moins un agent anti-réversion.

4. Composé de caoutchouc selon l'une des revendications précédentes, **caractérisé en ce que** la base polymère à chaîne insaturée réticulable comprend au moins 65 % en poids de la base polymère de caoutchouc naturel.

5. Composé de caoutchouc selon l'une quelconque des revendications précédentes, **caractérisé en ce que** la base polymère à chaîne insaturée réticulable est constituée d'un mélange de caoutchouc naturel et d'un copolymère de butadiène.

6. Composé de caoutchouc selon l'une des revendications précédentes, **caractérisé en ce qu'**il comprend du noir de carbone comme charge unique.

7. Partie de carcasse de pneu fabriquée avec un composé selon l'une des revendications précédentes.

8. Partie de carcasse de pneu selon la revendication 7 **caractérisée en ce qu'**elle est une SOUS-CHAPE ou un INSERT DE PLI DE CHAPE ou un COMPOSÉ DE BASE.

9. Pneu comprenant une partie selon la revendication 7 ou 8.
